# FASCICULE DE BREVET EUROPEEN

(11) **EP 1 854 272 B1**
(45) Date de publication et mention de la délivrance du brevet: **02.04.2014**
(21) Numéro de dépôt: 06725986.1
(22) Date de dépôt: 24.02.2006
(51) Int. Cl.: H04M 3/56, H04M 1/247

(54) **TERMINAL POUR RESEAU DE COMMUNICATION, ADAPTE POUR ENTRER EN CONFERENCE**
ENDGERÄT FÜR EIN KOMMUNIKATIONSNETZ, AUSGELEGT FÜR DEN ANSCHLUSS AN EINE KONFERENZ
TERMINAL FOR OF A COMMUNICATION NETWORK, ADAPTED TO JOIN IN A CONFERENCE

(30) Priorité: 24.02.2005 FR 0501899
(43) Date de publication de la demande: 14.11.2007
(73) Titulaire: Orange, 75015 Paris (FR)
(72) Inventeur: DALOZ, Claude, F-22300 Lannion (FR); CARLIER, Laura, 22700 Perros Guirec (FR); TOUTAIN, François, F-22700 Louannec (FR)
(74) Mandataire: Regimbeau
(86) Numéro de dépôt international: PCT/FR2006/000423
(87) Numéro de publication internationale: WO 2006/095071

(56) Documents cités:
- WO-A-01/37520
- GB-A- 2 307 825
- US-A- 5 631 954
- US-A1- 2001 002 927
- US-A1- 2002 172 341
- US-A1- 2003 119 540
- "MEHR KOMFORT FUER TELEKOM-KUNDEN", FUNKSCHAU, WEKA FACHZEITSCHRIFTEN VERLAG, POING, DE, no. 2, 3 January 1997 (1997-01-03), pages 68-70, XP000685754, ISSN: 0016-2841

## Description

La présente invention concerne le domaine des télécommunications et plus particulièrement les services de mises en conférence de terminaux.

On connaît déjà les services de conférences téléphoniques ou audiovisuelles.

Les publications US 5 631 954 et US 2002/172341 divulguent en particulier un terminal conforme au préambule de la revendication 1, et la publication US 2001/002927 divulgue en outre une base de gestion de communautés conforme au préambule de la revendication 11.

Un tel service, dont le fonctionnement donne par ailleurs satisfaction, nécessite pour son utilisation quelques opérations préparatoires qui peuvent le rendre assez fastidieux à préparer.

En effet, préalablement à la conférence, il est nécessaire de réserver un pont de conférence, pour obtenir un numéro de serveur vocal et un code d'accès.

Il faut ensuite communiquer le numéro du serveur vocal et le code d'accès à tous les invités à la conférence, ainsi que la plage horaire de réservation.

A l'heure prévue, chaque participant à la conférence doit téléphoner au serveur vocal et composer le code d'accès pour entrer en communication avec le pont de conférence.

Ainsi, les opérations préparatoires ainsi que les manipulations nécessaires pour entrer en conférence constituent des lourdeurs qui empêchent une utilisation spontanée du service de mise en conférence.

Il existe donc un besoin pour un moyen permettant d'utiliser les services de mise en conférence plus aisément.

Un des buts de l'invention est de satisfaire ce besoin en proposant un terminal adapté à une mise en conférence simplifiée.

La présente invention à pour objet un lot de terminaux d'un réseau de communication comprenant un serveur de pont de conférence, chaque terminal étant apte à initier une conférence en établissant une connexion avec ledit serveur de pont de conférence ledit serveur de pont de conférence comportant des moyens de mise en conférence permettant de mettre en communication, sur un même pont de conférence, plusieurs terminaux se trouvant simultanément connectés au serveur de pont de conférence, caractérisé en ce qu'il comporte un organe de commande dont l'actionnement provoque :
- d'une part, l'établissement d'une connexion entre le terminal et le serveur de pont de conférence, et
- d'autre part, l'entrée du terminal en communication sur un pont de conférence.

Grâce à l'invention, les utilisateurs peuvent aisément rejoindre un pont de conférence sans avoir à effectuer aucune préparation. L'entrée dans une conférence peut se faire spontanément.

Dans un mode de réalisation particulier, au moins un terminal du lot de terminaux comporte des moyens de réception d'un signal de présence d'un ou plusieurs terminaux sur un pont de conférence et des moyens d'avertissement d'un utilisateur en cas de réception d'un tel signal de présence.

Ainsi, il n'est plus nécessaire de planifier une conférence pour y entrer à l'heure convenue, chaque entrée d'un utilisateur dans la conférence constituant pour les autres une invitation à y entrer.

Selon un autre mode de réalisation, l'organe de commande est configurable pour composer, lors de son actionnement, un code prédéterminé d'accès à un pont de conférence.

Dans ce mode de réalisation, le terminal comportant cette fonctionnalité coopère avec un serveur qui reçoit le code d'accès et redirige une communication établie avec le terminal sur un numéro de pont de conférence.

Selon un autre mode de réalisation, au moins un terminal du lot de terminaux comporte des moyens de stockage de paramètres de configuration en vue de l'entrée de ce terminal en communication sur un pont de conférence prédéterminé. Ces moyens de stockage permettent de reconfigurer le terminal pour inscrire son utilisateur sur un nouveau pont de conférence ou pour faire une mise à jour des paramètres de connexion en cas de nécessité.

Dans une variante de ce mode de réalisation, au moins un terminal du lot de terminaux comporte des moyens de réception de paramètres de configuration pour la connexion du terminal avec le serveur de pont de conférence, afin que les paramètres de configuration puissent être envoyés au terminal via le réseau. La mise à jour des paramètres de connexion au pont de conférence peut ainsi être totalement transparente pour l'utilisateur.

La présente invention a également pour objet un terminal d'un lot de terminaux tel que défini ci-dessus.

La présente invention a également pour objet un serveur de gestion de présence sur un pont de conférence, dans un réseau de communication dans lequel des terminaux d'un lot de terminaux tel que défini ci-dessus peuvent se connecter à un serveur de pont de conférence pour entrer en communication sur un même pont de conférence, caractérisé en ce qu'il comprend des moyens d'émission d'un signal d'information de présence d'un terminal sur un pont de conférence à au moins un autre terminal présent sur le réseau.

Dans un mode de réalisation particulier, le signal d'information de présence n'est envoyé qu'aux membres ou des communautés concernées, c'est-à-dire au moins une communauté à laquelle appartient le terminal dont la présence est signalée.

Comme cela a déjà été expliqué, les autres utilisateurs de terminaux, appartenant aux communautés auxquelles l'utilisateur du terminal souhaite signaler sa présence, inscrits sur un même pont de conférence peuvent ainsi être prévenus de l'entrée d'un utilisateur dans ce pont de conférence, ce qui permet d'improviser des conférences de manière spontanée sans avoir à les planifier.

La présente invention a également pour objet un serveur de gestion d'accès à un pont de conférence, dans un réseau de communication dans lequel des terminaux d'un lot de terminaux tel que défini ci-dessus peuvent se connecter à un serveur de pont de conférence pour entrer en communication sur un même pont de conférence, caractérisé en ce qu'il comprend des moyens pour envoyer des paramètres de configuration à un terminal présent sur le réseau.

Dans un mode de réalisation particulier, le serveur de gestion d'accès peut gérer plusieurs ponts de conférence et comprend à cet effet :
- des moyens pour associer à chaque pont de conférence, identifié par un code d'accès, des paramètres de configuration pour configurer un terminal en vue de son entrée en communication sur le pont de conférence,
- des moyens pour recevoir un code d'accès provenant d'un terminal.

Dans ce mode de réalisation, l'accès à un pont de conférence résulte de l'envoi préalable des paramètres de configuration au terminal, puis de l'établissement de la communication avec le pont de conférence par le terminal.

Dans un autre mode de réalisation, le serveur de gestion d'accès à plusieurs ponts de conférence est caractérisé en ce qu'il comprend des moyens pour rediriger, à la suite de la réception d'un code d'accès provenant d'un terminal, une communication établie avec ce terminal sur le numéro du pont de conférence associé au code d'accès reçu.

Dans ce mode de réalisation, l'accès à un pont de conférence ne requiert pas la reconfiguration préalable du terminal.

En combinaison avec ce mode de réalisation, une base de gestion des communautés comprend des moyens pour attribuer dynamiquement un numéro de pont de conférence à une communauté de membres dès l'entrée en communication d'un nombre prédéterminé de membres de la communauté et libérer ce numéro lors de la sortie d'un dernier membre. Cette variante permet d'optimiser la gestion des ponts de conférence disponibles et de mobiliser exactement le nombre de ponts de conférence requis en fonction de la demande réelle des utilisateurs.

Le nombre prédéterminé de membres peut être 1, mais l'optimisation des ressources de conférence pour conduire à préférer le nombre 2 ou 3.

Enfin, l'invention a pour objet un système de communication par conférences, dans un réseau de communication, caractérisé en ce qu'il comprend :
- un serveur de pont de conférence, comportant des moyens de mise en conférence permettant de mettre en communication, sur un même pont de conférence, plusieurs terminaux se trouvant simultanément connectés au serveur de pont de conférence,
- un lot de terminaux tel que défini ci-dessus, dans lequel chaque terminal est apte à initier une conférence en établissant une communication avec le serveur de pont de conférence.

Selon d'autres caractéristiques non limitatives du système, qui peuvent être prises seules ou en combinaison :
- Le système comprend un serveur de gestion de présence.
- Le système comporte un serveur de gestion d'accès.
- Le système comporte une base de gestion des communautés, apte à enregistrer des identifiants de terminaux inscrits à chaque pont de conférence, ainsi qu'éventuellement certains droits particuliers affectés à certains terminaux.

Dans le but de mieux faire comprendre l'invention, on va en décrire maintenant des modes de réalisation donnés à titre d'exemples non limitatifs de la portée de l'invention, en référence aux dessins annexés dans lesquels :
- la figure 1 représente schématiquement un terminal selon un premier mode de réalisation de l'invention,
- la figure 2 montre le terminal de la figure 1 dans un réseau de communication,
- la figure 3 représente un groupe de serveur,
- la figure 4 est un chronogramme des opérations mises en oeuvre lors de l'entrée en conférence du terminal,
- la figure 5 est un chronogramme des opérations mises en oeuvre lors de l'entrée en conférence de plusieurs terminaux,
- la figure 6 est une représentation schématique d'un terminal selon un autre mode de réalisation de l'invention,
- la figure 7 est un chronogramme des opérations mises en oeuvre lors de l'entrée en conférence du terminal de la figure 6,
- la figure 8 représente un groupe de serveurs selon un autre mode de réalisation de l'invention,
- la figure 9 est un chronogramme montrant une mise en conférence d'un terminal grâce au groupe de serveurs de la figure 8,
- la figure 10 représente un groupe de serveurs selon un autre mode de réalisation de l'invention,
- la figure 11 est une représentation schématique d'un terminal selon un autre mode de réalisation de l'invention,
- la figure 12 est un chronogramme des différentes opérations mises en oeuvre lors de l'entrée en conférence du terminal de la figure 11,
- la figure 13 est une représentation schématique d'un terminal selon un autre mode de réalisation de l'invention,
- la figure 14 représente le terminal de la figure 13 dans un réseau de communications.

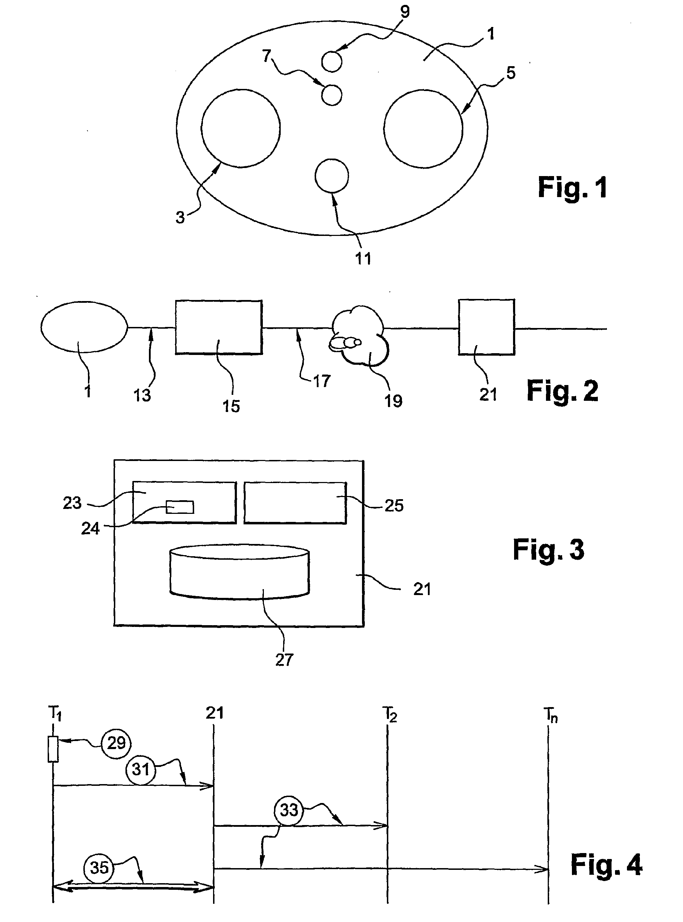

Le terminal T₁ représenté sur la figure 1 comprend, dans un boîtier 1, un microphone 3 et un haut-parleur 5, ainsi qu'une diode de fonctionnement 7 et une diode de présence 9.

De manière classique, le microphone et le haut-parleur permettent de capter et d'émettre des sons pour des communications audio avec d'autres terminaux présents sur le réseau.

La diode de fonctionnement 7 est un témoin du fonctionnement de l'appareil.

La diode de présence 9 est un témoin de la présence, sur un pont de communication prédéterminé, d'autres terminaux, comme cela sera expliqué ultérieurement.

Le terminal comporte en outre un organe de commande sous la forme d'un bouton poussoir 11.

Dans le réseau de la figure 2, le terminal est relié par une connexion filaire 13 à une passerelle 15, elle-même reliée via une connexion 17 à une ligne téléphonique d'abonné à un réseau d'accès d'un opérateur 19, auquel est reliée une plate-forme 21 de voix sur protocole Internet (VoIP).

Il convient de préciser que si, dans l'exemple représenté, le terminal est utilisé dans le cadre d'une architecture VoIP, l'invention peut également être mise en oeuvre dans le cadre d'une installation plus courante de réseau téléphonique commuté.

Dans la plate-forme 21, on trouve un groupe de serveurs, représenté sur la figure 3.

Chacun de ces serveurs peut être constitué par une machine isolée ou par un programme exécuté sur une machine commune.

Dans la suite de la description, on désigne par le terme «module» chacun des serveurs appartenant au groupe de serveurs 21.

Un premier module 23 est un module de gestion de présence qui surveille, à tout moment, quels sont les terminaux qui sont présents sur le pont de conférence. Ce module comporte des moyens 24 d'émission, via le réseau, de signaux d'information de présence d'un terminal sur un pont de conférence à tout autre terminal présent sur le réseau.

Un second module 25 est un module de pont de conférence auquel les terminaux présents sur le réseau peuvent se connecter pour entrer en conférence et qui offre des interfaces homme-machine de gestion de communautés aussi bien pour les utilisateurs, clients des opérateurs, que pour les opérateurs eux-mêmes.

Enfin, un troisième module 27 est une base de gestion des communautés qui permet de gérer plusieurs ponts de conférences.

Dans ce mode de réalisation, chaque terminal Tᵢ n'est attaché qu'à un seul pont de conférence et les paramètres de connexion du terminal au module ont été préalablement enregistrés dans ledit terminal Tᵢ.

La base de gestion des communautés contient l'identifiant de chaque terminal inscrit à un pont de conférence, l'identifiant de la communauté à laquelle il appartient, ainsi qu'éventuellement certains droits particuliers affectés à certains terminaux.

A l'aide du chronogramme de la figure 4, on va maintenant décrire la succession d'évènements qui se produisent lors d'une entrée en conférence d'un terminal T₁, ainsi que le comportement du terminal T₁ et du groupe de serveurs 21.

Sur ce chronogramme (de gauche à droite), la première ligne verticale correspond au premier terminal T₁, la deuxième ligne correspond au groupe de serveurs 21, la troisième ligne à un deuxième terminal T₂, et la quatrième ligne à un énième terminal Tₙ.

Lors d'une première étape 29, l'utilisateur du terminal T₁ presse l'organe de commande 11 (bouton poussoir) pour demander la mise en communication du terminal avec le pont de conférence.

En réponse à cette demande, lors d'une étape 31, la communication est établie avec le groupe de serveurs 21.

Lors d'une étape suivante 33, le module de gestion de présence 23, grâce à ses moyens 24, envoie aux autres terminaux T₂ et Tₙ un signal de présence du terminal T₁ sur le pont de conférence.

Chaque terminal T₂, Tₙ, qui est identique au terminal T₁, reçoit ce signal de présence, et la diode de présence 9 sur chaque terminal s'allume pour signaler aux utilisateurs de ces terminaux qu'un terminal est présent sur le pont de conférence.

La communication en mode conférence entre le terminal T₁ et le pont de conférence (sur lequel d'autres terminaux peuvent également être déjà présents) peut commencer, ce qui est illustré par la double flèche 35 sur la figure 4.

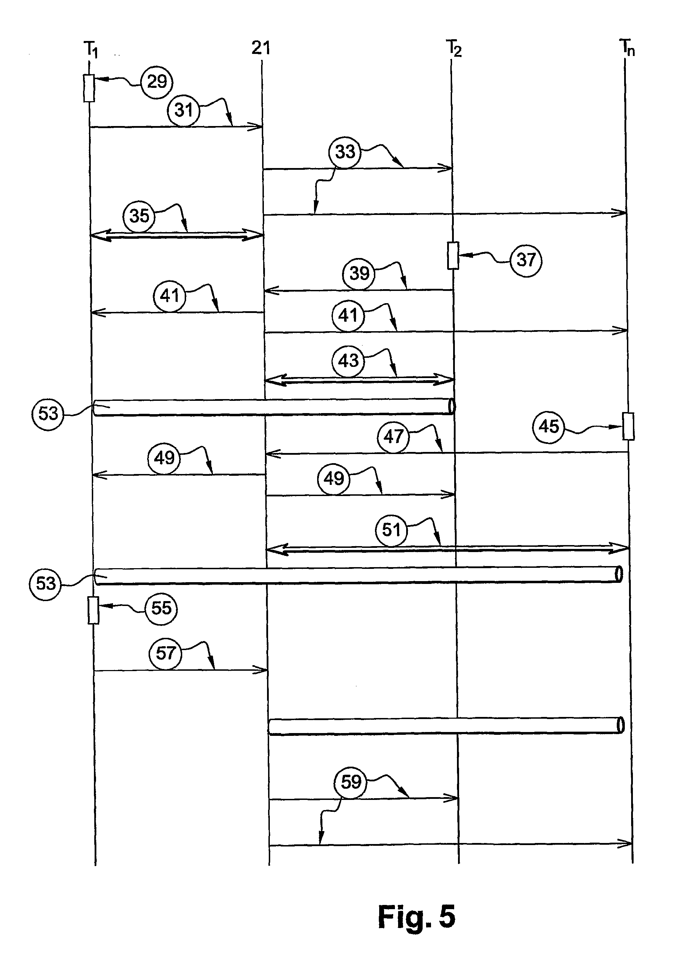

Sur la figure 5, on voit un chronogramme comprenant quatre lignes verticales dont chacune correspond, comme sur la figure 4, aux terminaux T₁, T₂ et Tₙ, et au groupe de serveurs 21.

Ce chronogramme comprend les mêmes premières étapes 29, 31, 33 et 35 que le chronogramme de la figure 4.

Lors d'une étape supplémentaire 37, l'utilisateur du terminal T₂, ayant reçu l'information de présence du terminal T₁ sur le pont de conférence, décide lui aussi de rejoindre le pont de conférence.

A cet effet, il enfonce le bouton poussoir 11 du terminal T₂, ce qui provoque l'établissement d'une communication (étape 39) entre le terminal T₂ et le groupe de serveurs 21.

Comme précédemment, le groupe de serveurs 21, et plus précisément le module de gestion de présence 23 envoie aux autres terminaux T₁ et Tₙ, lors d'une étape 41, un signal d'information de présence d'un nouveau terminal sur le pont de conférence, de sorte que les utilisateurs des terminaux T₁ et Tₙ sont à leur tour avertis de l'entrée d'un utilisateur sur le pont de conférence. Dans une variante, les témoins de présence 9 de tous les terminaux demeurent allumés tant qu'il existe un terminal connecté au pont de conférence. Dans cette variante, l'entrée du terminal T₂ ne provoque aucun changement sur les autres terminaux.

Le terminal T₂ est ensuite connecté au pont de conférence par le module 25, ce qui est illustré par la double flèche 43 de la figure 4, ce qui lui permet de communiquer en mode conférence avec l'utilisateur du terminal T₁ et avec les éventuels autres terminaux déjà présents sur le pont de conférence. Une conférence 53 est ainsi mise en place.

A son tour, l'utilisateur du terminal Tₙ décide de rejoindre le pont de conférence.

A cet effet, il presse le bouton poussoir 11 du terminal Tₙ, ce qui provoque l'établissement d'une communication (étape 47) avec le groupe de serveurs 21, puis l'envoi d'un signal de présence (étape 49) aux autres terminaux T₁ et T₂.

Consécutivement, lors d'une étape 51, le terminal Tₙ se retrouve en communication avec le groupe de serveurs 21, et plus précisément avec le module de pont de conférence 25.

La conférence audio 53 est ainsi établie entre les terminaux T₁, T₂ et Tₙ.

Ultérieurement, l'utilisateur du terminal T₁ décide de quitter la conférence.

A cet effet, lors d'une étape 55, il enfonce le bouton poussoir 11 de son terminal.

Cet actionnement de l'organe de commande provoque, lors de l'étape 57, l'arrêt de la communication entre le terminal T₁ et le groupe de serveurs 21.

La conférence audio 53 se poursuit entre les terminaux T₂ et Tₙ.

Le module de gestion de présence 23, ayant détecté la sortie du terminal T₁, envoie aux terminaux T₂ et Tₙ un signal d'information de sortie lors d'une étape 59.

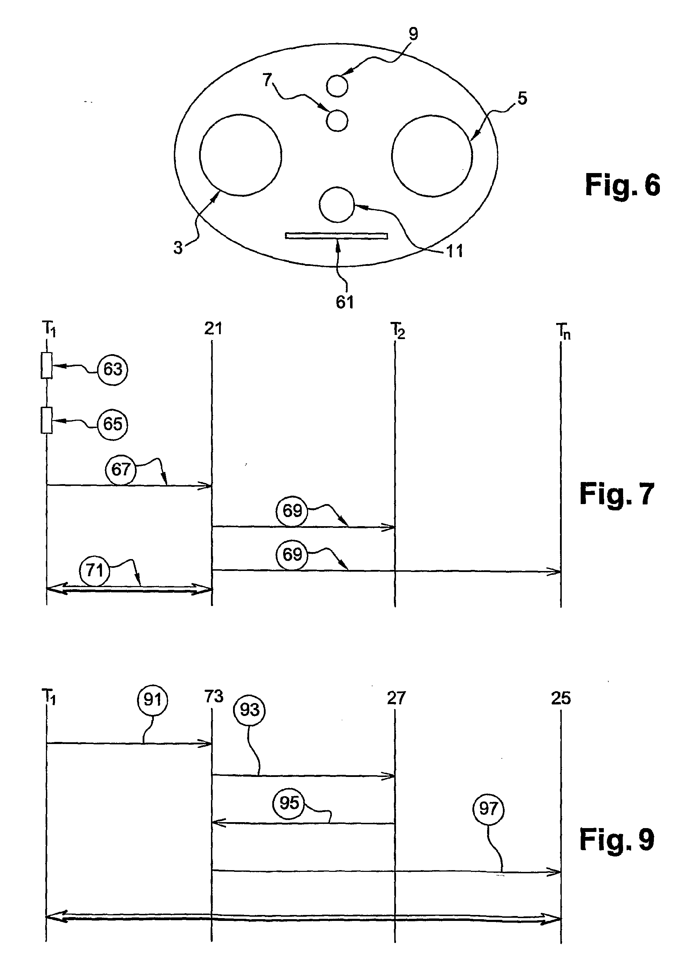

Dans le mode réalisation de la figure 6, le terminal comporte les mêmes éléments que celui de la figure 1.

Il comporte en outre un lecteur de carte 61 qui permet la lecture de cartes à puce sur lesquelles sont enregistrées des paramètres de configuration pour la mise en communication du terminal avec un pont de conférence.

Grâce à un tel terminal, un utilisateur peut, simplement en remplaçant la carte à puce lue, changer le pont de conférence auquel son terminal peut se connecter.

Un exemple d'une suite d'évènements liés au terminal de la figure 6 est illustré par le chronogramme de la figure 7.

Lors d'une première étape 63, l'utilisateur insère une carte (non représentée) dans le lecteur de cartes 61.

Le terminal lit alors les données de configuration qui lui permettront de se mettre en communication avec un pont de conférence déterminé.

Lors d'une étape 65, l'utilisateur enfonce le bouton 11 pour entrer sur le pont de conférence défini par la carte introduite dans le lecteur de cartes.

Les étapes suivantes ont déjà été décrites :
- 67 : établissement de la communication avec le groupe de serveurs 21,
- 69 : envoi d'informations de présence aux autres terminaux,
- 71 : entrée en conférence.

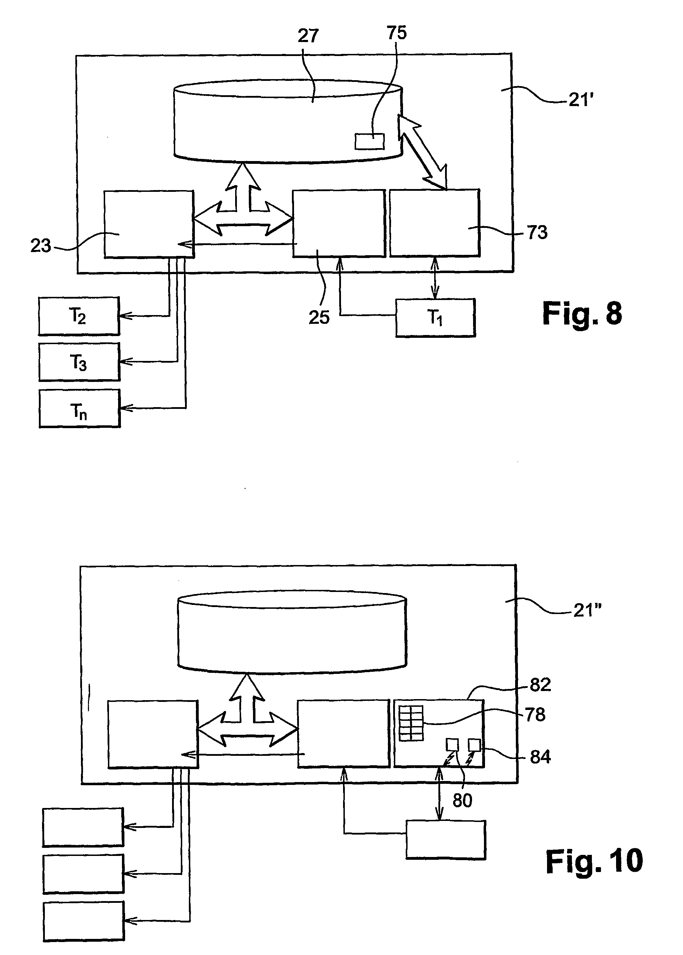

Dans le mode de réalisation de la figure 8, le groupe de serveurs 21' comprend, en plus de la base de gestion de communautés 27, du module de gestion de présence 23 et du module de pont de conférence 25, un module de gestion de service 73 qui est capable de renvoyer des appels provenant des terminaux vers des ponts de conférence.

La base de gestion des communautés 27 permet de constituer et recomposer les communautés par l'intermédiaire d'une interface utilisateur, par exemple grâce à une page web, permettant d'associer un nouveau terminal à une communauté ou d'en retirer un. Cette base contient un sous module 75 d'attribution dynamique de numéros qui attribue dynamiquement un numéro de pont de conférence dès l'entrée en communication d'un premier membre d'une communauté et libère ce numéro lors de la sortie du dernier membre.

Le chronogramme de la figure 9 illustre la mise en relation du terminal T₁ avec un pont de conférence dont le numéro est fourni dynamiquement.

L'utilisateur ayant enfoncé le bouton poussoir du terminal, ce bouton poussoir, préalablement configuré à cet effet, compose le numéro du module de gestion de service 73, suivi par exemple d'un code encadré par les caractères étoile (*) et dièse (#).

L'appel est acheminé jusqu'au module de gestion du service 73 (étape 91).

Le module de gestion de service 73 retrouve (à partir du code compris entre étoile et dièse et du numéro de la ligne appelante, ou uniquement à partir du code compris entre étoile et dièse, si celui-ci est unique) le code d'accès du pont de conférence à utiliser.

Par requête (étape 93), le module de gestion de service 73 demande à la base de gestion des communautés 27 le numéro du pont de conférence correspondant au terminal T₁ dans le pont de conférence identifié par le code d'accès. Ce numéro peut avoir déjà été attribué, si le terminal T₁ n'est pas le premier à entrer dans le pont de conférence. Sinon, il est dynamiquement attribué par le sous module 75 d'attribution dynamique de numéros.

Le numéro est fourni en retour (étape 95) par la base de gestion des communautés 27 au module de gestion de service 73 qui transfère l'appel du terminal (étape 97) sur le numéro du pont de conférence.

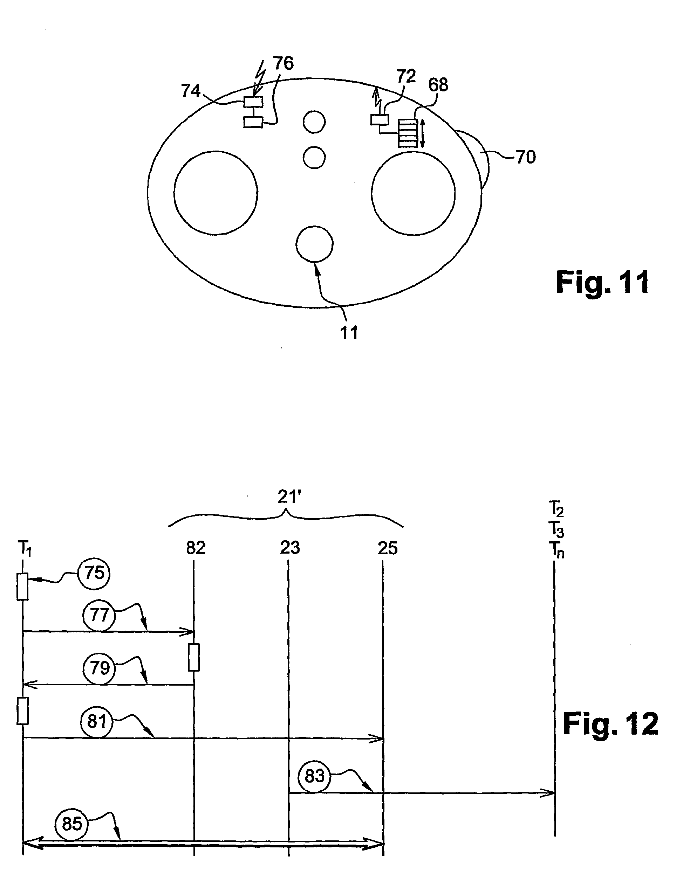

Dans un autre mode de réalisation, illustré par les figures 10 et 11, au moins un terminal, tel celui représenté sur la figure 11, comprend une mémoire 68 de stockage de plusieurs codes d'accès à autant de ponts de conférence différents et une molette 70 constituant des moyens de sélection d'un pont de conférence identifié par un de ces codes d'accès. Le terminal comprend également des moyens 72 d'émission, via le réseau, de ce code d'accès au moment de la demande d'entrée en conférence (par pression du bouton poussoir 11), des moyens 74 de réception, via le réseau, de paramètres de configuration et des moyens 76 de stockage des paramètres de configuration reçus par les moyens de réception 74.

De son côté, le groupe de serveurs 21" contient un module de gestion de service 82 qui remplit le rôle de serveur de configuration et contient une table 78 associant à chaque pont de conférence, identifié par un code d'accès unique, des données de configuration des terminaux en vue de la mise en communication de ces terminaux avec le pont de conférence associé. Le module de gestion de service contient également des moyens 80 pour envoyer des paramètres de configuration à un terminal et des moyens 84 pour recevoir un code d'accès provenant d'un terminal.

Ainsi, lorsqu'un utilisateur désire entrer en conférence sur un pont de conférence particulier, il sélectionne ce pont de conférence sur son terminal grâce à la molette 70 et appuie sur le bouton poussoir 11. Le terminal envoie alors au module de gestion de service 82 le code d'accès du pont de conférence choisi, et le module de gestion de service 82 renvoie les données de configuration au terminal.

Tout se passe donc comme si l'utilisateur venait d'introduire dans son téléphone une nouvelle carte à puce, par analogie avec le mode de réalisation de la figure 6.

Ce mécanisme permet également, même sans changement de pont de conférence, de mettre à jour les données de configuration de terminal, ce qui rend tout changement de configuration totalement transparent pour l'utilisateur.

Les évènements se déroulent comme illustré par le chronogramme de la figure 12.

Lors d'une étape 75, l'utilisateur presse le bouton poussoir 11 du terminal T₁, ce qui provoque l'établissement d'une connexion avec le module de gestion de service 82, et l'envoi, lors d'une étape 77, (par les moyens 72 vers les moyens 84) du code d'accès au pont de conférence sélectionné dans le terminal. Par ses moyens 80, le module de gestion de service 82 retourne ensuite (étape 79) aux moyens 74 du terminal T₁ les données de configuration nécessaires à la préparation dudit terminal pour son entrée sur le pont de conférence identifié par le code d'accès transmis lors de l'étape 77.

Le terminal enregistre ces paramètres dans ses moyens 76 de stockage des paramètres de configuration et est ainsi prêt à établir une communication avec le pont de conférence adequat.

Lors d'une étape 81, la communication s'établit entre le terminal T₁ et le serveur de pont de conférence 25, puis le gestionnaire de présence 23 envoie aux terminaux T₂, T₃ et Tₙ un signal d'information de présence lors de l'étape 83.

Une communication 85 est ainsi établie et la conférence peut débuter entre le terminal T₁ et tous les autres terminaux déjà présents sur le pont de conférence.

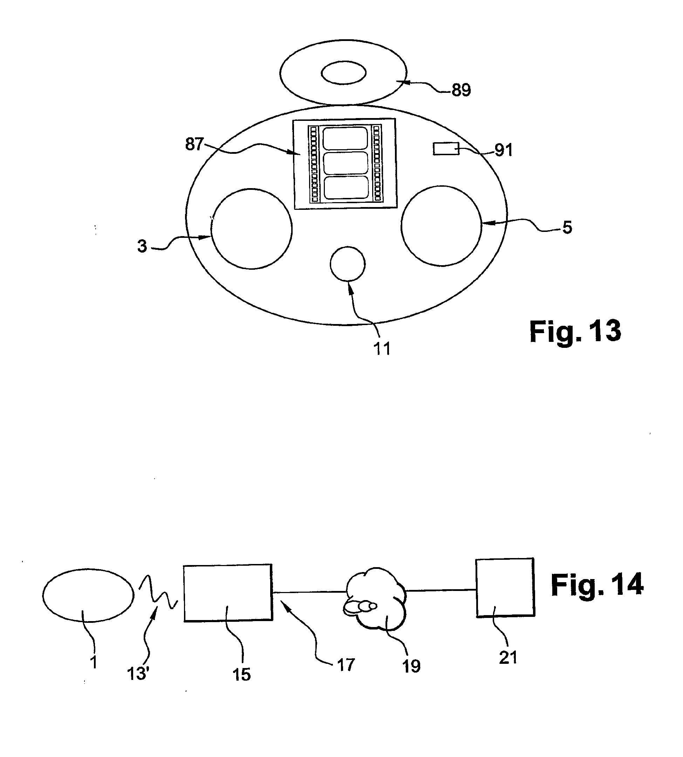

Dans le mode de réalisation de la figure 13, le terminal comprend un écran 87 et une caméra 89, ce qui lui permet d'établir des communications audiovisuelles avec les serveurs en vue de conférences audiovisuelles.

Le terminal de la figure 13 comporte également un émetteur-récepteur 91 de courte portée, par exemple de type Wi-Fi ou Bluetooth, qui lui permet de se connecter à la passerelle 15 via une connexion sans fil 13', comme on le voit sur la figure 14.

Les autres parties de la figure 14 ont déjà été décrites à la référence en figure 2.

Bien que cela ne soit pas décrit ici, une combinaison est possible entre les modes de réalisation précédents, notamment en prévoyant un lecteur de cartes sur un terminal en même temps que des moyens de sélection de pont de conférence, avec un module de gestion de services dans le groupe de serveurs.

Il est bien entendu que les modes de réalisation décrits ci-dessus ne présentent aucun caractère limitatif.

En variante, un utilisateur d'un terminal (T1) peut par exemple appartenir à plusieurs communautés. Dans ce cas, le terminal (T1) comprend des moyens de gestion des communautés et de sélection d'au moins une communauté parmi les communautés auxquelles l'utilisateur du terminal (T1) appartient. Les seuls terminaux appartenant aux communautés sélectionnées seront alors avertis de la présence de ce terminal sur le pont de conférence (35, 51, 71).

## Revendications

1. Terminal (Tᵢ, T₂, Tᵢ, Tₙ) pour réseau de communication, configuré pour établir une connexion avec un serveur (25) de pont de conférence du réseau, ledit serveur de pont de conférence comportant des moyens de mise en conférence permettant de mettre en communication, sur un même pont de conférence (35, 51, 71), plusieurs terminaux se trouvant simultanément connectés au serveur de pont de conférence, **caractérisé en ce qu'**il comporte :
- des moyens de sélection (70) d'un pont de conférence, et
- un organe de commande (11) dont l'actionnement provoque:
- d'une part, l'établissement d'une connexion entre le terminal (T1) et le serveur de pont de conférence comportant le pont de conférence sélectionné, et
- d'autre part, l'entrée du terminal en communication sur le pont de conférence sélectionné (35, 51, 71), avec des terminaux présents sur ledit pont de conférence sélectionné.

2. Terminal selon la revendication 1, dans lequel le moyen de sélection (70) d'un pont de conférence comporte une molette.

3. Terminal selon l'une des revendications 1 et 2, dans lequel le pont de conférence sélectionné est identifié par un code d'accès.

4. Terminal selon l'une des revendications 1 à 3, comportant des moyens de réception d'un signal de présence d'un ou plusieurs terminaux sur un pont de conférence et des moyens d'avertissement (9) d'un utilisateur en cas de réception d'un tel signal de présence.

5. Terminal selon l'une des revendications 1 à 4, dans lequel l'organe de commande est configurable pour composer, lors de son actionnement, un code prédéterminé d'accès à un pont de conférence.

6. Terminal selon l'une des revendications 1 à 5, comportant des moyens de stockage (76) de paramètres de configuration en vue de l'entrée du terminal en communication sur un pont de conférence prédéterminé.

7. Terminal selon la revendication 6, comportant des moyens de réception (74) de paramètres de configuration pour la connexion du terminal avec le serveur (23) de pont de conférence.

8. Système de communication par conférences, dans un réseau de communication, **caractérisé en ce qu'**il comprend :
- un serveur (25) de pont de conférence, comportant des moyens de mise en conférence permettant de mettre en communication, sur un même pont de conférence, plusieurs terminaux (T₁, T₂, Tᵢ, Tₙ) se trouvant simultanément connectés au serveur de pont de conférence,
- au moins un terminal (T₁, T₂, Tᵢ, Tₙ) selon l'une des revendications 1 à 7, apte à établir une connexion avec le serveur de pont de conférence

9. Système selon la revendication 8, **caractérisé en ce qu'**il comprend en outre un serveur (23) de gestion de présence comprenant des moyens d'émission d'un signal d'information de présence d'un terminal sur un pont de conférence à au moins un autre terminal présent sur le réseau.

10. Système selon la revendication 9, dans lequel les moyens d'émission d'un signal d'information de présence dudit serveur (23) de gestion de présence sont programmés pour n'envoyer le signal d'information de présence qu'aux membres d'au moins une communauté à laquelle appartient le terminal dont la présence est signalée.

11. Système selon la revendication 8, dans un réseau de communication dans lequel des terminaux (T₁, T₂, Tᵢ, Tₙ) selon la revendication 7 peuvent se connecter à un serveur de pont de conférence pour entrer en communication sur un même pont de conférence, **caractérisé en ce qu'**il comprend en outre un serveur (82) de gestion d'accès à plusieurs ponts de conférence, comprenant des moyens (80) pour envoyer des paramètres de configuration à un terminal (T1) présent sur le réseau.

12. Système selon la revendication 11, dans lequel le serveur (82) de gestion d'accès comprend:
- des moyens (78) pour associer à chaque pont de conférence, identifié par un code d'accès, des paramètres de configuration pour configurer un terminal en vue de son entrée en communication sur le pont de conférence,
- des moyens (84) pour recevoir un code d'accès provenant d'un terminal.

13. Système selon la revendication 8, dans un réseau de communication dans lequel des terminaux (T₁, T₂, Tᵢ, Tₙ) selon la revendication 5 peuvent se connecter à un serveur de pont de conférence pour entrer en communication sur un même pont de conférence, **caractérisé en ce que** le système comprend en outre un serveur (73) de gestion d'accès à plusieurs ponts de conférence, comprenant des moyens pour rediriger, à la suite de la réception d'un code d'accès provenant d'un terminal, une communication établie avec ce terminal sur le numéro du pont de conférence associé au code d'accès reçu.

14. Système selon les revendication 8 et 12, dans un réseau de communication dans lequel des terminaux (T₁, T₂, Tᵢ, Tₙ) selon la revendication 5 peuvent se connecter à un serveur de pont de conférence pour entrer en communication sur un même pont de conférence, grâce au serveur (73) de gestion d'accès, **caractérisée en ce que** le système inclut une base de gestion des communautés (27), comprenant des moyens (75) pour attribuer dynamiquement un numéro de pont de conférence à une communauté de membres dès l'entrée en communication d'un nombre prédéterminé de membres de la communauté et libérer ce numéro lors de la sortie d'un dernier membre.

15. Système selon la revendication 14, dans lequel le nombre prédéterminé est 1, 2 ou 3.

16. Système de communication selon l'une des revendications 14 et 15, dans lequel la base (27) de gestion des communautés est apte à enregistrer des identifiants de terminaux inscrits à chaque pont de conférence, ainsi qu'éventuellement certains droits particuliers affectés à certains terminaux.

## Patentansprüche

1. Endgerät (T₁, T₂, Tᵢ, Tₙ) für Kommunikationsnetz, das konfiguriert ist, eine Verbindung mit einem Konferenzbrückenserver (25) des Netzes aufzubauen, wobei der Konferenzbrückenserver Mittel zum Einrichten einer Konferenz aufweist, die es erlauben, in Kommunikation auf ein und derselben Konferenzbrücke (35, 51, 71) mehrere Endgeräte, die gleichzeitig an den Konferenzbrückenserver angeschlossen sind, zu verbinden, **dadurch gekennzeichnet, dass** es Folgendes aufweist:
- Auswahlmittel (70) einer Konferenzbrücke und
- ein Steuerorgan (11), dessen Betätigen Folgendes bewirkt:
- einerseits das Herstellen einer Verbindung zwischen dem Endgerät (T1) und dem Konferenzbrückenserver, der die ausgewählte Konferenzbrücke enthält, und
- andererseits den Anschluss des Endgeräts in Kommunikation auf dem ausgewählten Konferenzbrückenserver (35, 51, 71) mit Endgeräten, die auf dem ausgewählten Konferenzbrückenserver gegenwärtig sind.

2. Endgerät nach Anspruch 1, bei dem das Auswahlmittel (70) einer Konferenzbrücke ein Rändelrad aufweist.

3. Endgerät nach einem der Ansprüche 1 und 2, bei dem die ausgewählte Konferenzbrücke durch einen Zugangscode identifiziert ist.

4. Endgerät nach einem der Ansprüche 1 bis 3, das Mittel zum Empfangen eines Gegenwartssignals eines oder mehrerer Endgeräte auf einer Konferenzbrücke und Mittel zum Warnen (9) eines Benutzers beim Empfang eines solchen Gegenwartssignals aufweist.

5. Endgerät nach einem der Ansprüche 1 bis 4, bei dem das Steuerorgan konfigurierbar ist, bei seinem Betätigen einen vorbestimmten Zugangscode zu einer Konferenzbrücke zu wählen.

6. Endgerät nach einem der Ansprüche 1 bis 5, das Speichermittel (76) von Konfigurationsparametern zum Anschließen des Endgeräts in Kommunikation auf der vorbestimmten Konferenzbrücke aufweist.

7. Endgerät nach Anspruch 6, das Empfangsmittel (74) von Konfigurationsparametern für den Anschluss des Endgeräts an den Konferenzbrückenserver (23) aufweist.

8. Kommunikationssystem durch Konferenzen in einem Kommunikationsnetz, **dadurch gekennzeichnet, dass** es Folgendes aufweist:
- einen Konferenzbrückenserver (25), der Mittel zum Verbinden in Konferenz aufweist, die es erlauben, in Kommunikation auf ein und derselben Konferenzbrücke mehrere Endgeräte (T₁, T₂, Tᵢ, Tₙ), die gleichzeitig an den Konferenzbrückenserver angeschlossen sind, zu verbinden,
- mindestens ein Endgerät (T₁, T₂, Tᵢ, Tₙ) nach einem der Ansprüche 1 bis 7, das fähig ist, eine Verbindung mit dem Konferenzbrückenserver aufzubauen.

9. System nach Anspruch 8, **dadurch gekennzeichnet, dass** es außerdem einen Gegenwartsverwaltungsserver (23) aufweist, der Mittel zum Senden eines Gegenwartsinformationssignals eines Endgeräts auf einer Konferenzbrücke an mindestens ein anderes Endgerät, das auf dem Netz gegenwärtig ist, aufweist.

10. System nach Anspruch 9, bei dem die Mittel zum Senden eines Gegenwartsinformationssignals des Gegenwartsverwaltungsservers (23) programmiert sind, um das Gegenwartsinformationssignal nur an Mitglieder mindestens einer Gemeinschaft, zu der das Endgerät, dessen Gegenwart gemeldet wird, gehört, zu senden.

11. System nach Anspruch 8 in einem Kommunikationsnetz, in dem sich die Endgeräte (T₁, T₂, Tᵢ, Tₙ) nach Anspruch 7 an einen Konferenzbrückenserver anschließen können, um auf ein und derselben Konferenzbrücke in Verbindung zu treten, **dadurch gekennzeichnet, dass** es außerdem einen Zugangsverwaltungsserver (82) zu mehreren Konferenzbrücken aufweist, der Mittel (80) aufweist, um Konfigurationsparameter an ein Endgerät (T1), das auf dem Netz gegenwärtig ist, zu senden.

12. System nach Anspruch 11, bei dem der Zugangsverwaltungsserver (82) Folgendes aufweist:
- Mittel (78) zum Verbinden mit jeder Konferenzbrücke, die durch einen Zugangscode identifiziert ist, der Konfigurationsparameter, um ein Endgerät für seinen Anschluss in Kommunikation auf der Konferenzbrücke zu konfigurieren,
- Mittel (84), um einen Zugangscode, der von einem Endgerät kommt, zu empfangen.

13. System nach Anspruch 8 in einem Kommunikationsnetz, in dem sich Endgeräte (T₁, T₂, Tᵢ, Tₙ) nach Anspruch 5 an einen Konferenzbrückenserver anschließen können, um auf ein und derselben Konferenzbrücke in Kommunikation zu treten, **dadurch gekennzeichnet, dass** das System außerdem einen Zugangsverwaltungsserver (73) zu mehreren Konferenzbrücken aufweist, der Mittel aufweist, um im Anschluss an den Empfang eines Zugangscodes, der von einem Endgerät kommt, eine mit diesem Endgerät aufgebaute Kommunikation zu der Nummer der Konferenzbrücke, die mit dem empfangenen Zugangscode verbunden ist, umzuleiten.

14. System nach den Ansprüchen 8 und 12, in einem Kommunikationsnetz, in dem sich Endgeräte (T₁, T₂, Tᵢ, Tₙ) nach Anspruch 5 an einen Konferenzbrückenserver anschließen können, um auf ein und derselben Konferenzbrücke dank des Zugangsverwaltungsservers (73) in Kommunikation zu treten, **dadurch gekennzeichnet, dass** das System eine Gemeinschaftenverwaltungsbank (27) aufweist, die Mittel (75) aufweist, um dynamisch einer Mitgliedergemeinschaft ab dem Anschluss in Kommunikation einer vorbestimmten Anzahl von Mitgliedern der Gemeinschaft eine Konferenzbrückennummer zuzuweisen und diese Nummer beim Verlassen eines letzten Mitglieds freizugeben.

15. System nach Anspruch 14, bei dem die vorbestimmte Anzahl 1, 2 oder 3 ist.

16. Kommunikationssystem nach einem der Ansprüche 14 und 15, bei dem die Gemeinschaftenverwaltungsbank (27) geeignet ist, um Endgerätidentifikatoren zu registrieren, die bei jeder Konferenzbrücke angemeldet sind, sowie eventuell bestimmte Sonderrechte, die diesen Endgeräten zugewiesen sind.

## Claims

1. Terminal (T₁, T₂, Tᵢ, Tₙ) for a communication network, configured to set up a connection with a conference bridge server (25) of the network, said conference bridge server comprising conferencing means making it possible to connect, on one and the same conference bridge (35, 51, 71), a plurality of terminals that are simultaneously connected to the conference bridge server, **characterized in that** it comprises:
- means (70) for selecting a conference bridge, and
- a control member (11) whose actuation provokes:
- on the one hand, the setting up of a connection between the terminal (T1) and the conference bridge server comprising the selected conference bridge, and
- on the other hand, the entry of the terminal into communication over the selected conference bridge (35, 51, 71), with terminals present on said selected conference bridge.

2. Terminal according to Claim 1, in which the means (70) for selecting a conference bridge comprises a thumb wheel.

3. Terminal according to one of Claims 1 and 2, in which the selected conference bridge is identified by an access code.

4. Terminal according to one of Claims 1 to 3, comprising means for receiving a signal indicating presence of one or more terminals on a conference bridge and means (9) for warning a user in case of reception of such a presence signal.

5. Terminal according to one of Claims 1 to 4, in which the control member can be configured to dial, upon its actuation, a predetermined conference bridge access code.

6. Terminal according to one of Claims 1 to 5, comprising means (76) for storing configuration parameters for the terminal to enter into communication on a predetermined conference bridge.

7. Terminal according to Claim 6, comprising means (74) for receiving configuration parameters for the connection of the terminal with the conference bridge server (23).

8. Conference communication system, in a communication network, **characterized in that** it comprises:
- a conference bridge server (25), comprising conferencing means making it possible to connect, on one and the same conference bridge, a plurality of terminals (T₁, T₂, Tᵢ, Tₙ) that are simultaneously connected to the conference bridge server,
- at least one terminal (T₁, T₂, Tᵢ, Tₙ) according to one of Claims 1 to 7, capable of setting up a connection with the conference bridge server.

9. System according to Claim 8, **characterized in that** it also comprises a presence management server (23) comprising means for sending a signal indicating presence of a terminal on a conference bridge to at least one other terminal present on the network.

10. System according to Claim 9, in which the means for sending a presence indication signal of said presence management server (23) are programmed to send the presence indication signal only to the members of at least one community to which the terminal whose presence is signalled belongs.

11. System according to Claim 8, in a communication network in which terminals (T₁, T₂, Tᵢ, Tₙ) according to Claim 7 can connect to a conference bridge server to enter into communication on one and the same conference bridge, **characterized in that** it also comprises a server (82) for managing access to a plurality of conference bridges, comprising means (80) for sending configuration parameters to a terminal (T1) present on the network.

12. System according to Claim 11, in which the access management server (82) comprises:
- means (78) for associating with each conference bridge, identified by an access code, configuration parameters for configuring a terminal for it to enter into communication on the conference bridge,
- means (84) for receiving an access code from a terminal.

13. System according to Claim 8, in a communication network in which terminals (T₁, T₂, Tᵢ, Tₙ) according to Claim 5 can connect to a conference bridge server to enter into communication on one and the same conference bridge, **characterized in that** the system also comprises a server (73) for managing access to a plurality of conference bridges, comprising means for redirecting, following the reception of an access code from a terminal, a communication set up with this terminal to the number of the conference bridge associated with the received access code.

14. System according to Claims 8 and 12, in a communication network in which terminals (T₁, T₂, Tᵢ, Tₙ) according to Claim 5 can connect to a conference bridge server to enter into communication on one and the same conference bridge, using the access management server (73), **characterized in that** the system includes a communities management base (27), comprising means (75) for dynamically assigning a conference bridge number to a community of members as soon as a predetermined number of members of the community enter into communication and releasing this number when a last member exits.

15. System according to Claim 14, in which the predetermined number is 1, 2 or 3.

16. Communication system according to one of Claims 14 and 15, in which the communities management base (27) is able to save the identifiers of terminals registered at each conference bridge, and, optionally, certain particular rights assigned to certain terminals.
